# EUROPÄISCHE PATENTANMELDUNG

(11) **EP 1 334 895 A2**
(43) Veröffentlichungstag der Anmeldung: **13.08.2003**
(21) Anmeldenummer: 03002355.0
(22) Anmeldetag: 04.02.2003
(51) Int. Cl.: B62B 5/00, B62B 3/06

(54) **Antriebseinheit für Fahrzeug, insbesondere Hilfsantrieb für Handhubwagen**

(30) Priorität: 07.02.2002 DE 10204915
(71) Anmelder: ZF FRIEDRICHSHAFEN AG, 88038 Friedrichshafen (DE)
(72) Erfinder: Mann, Egon, 88045 Friedrichshafen (DE); Streipardt, Peter, 99880 Waltershausen (DE); Stübner, Frank, 99894 Ernstroda (DE)

(57) **Zusammenfassung**

Die Erfindung betrifft eine Antriebseinheit (10) für ein Fahrzeug, insbesondere Hilfsantrieb für einen Handhubwagen im Flurförderfahrzeugbereich, mit einer Nabe aus einem Gehäuseträger (8), einer Steuervorrichtung (2), einem Abtriebsglied (24), einem Elektromotor (1), einem Stirnradgetriebe (3), einer Park- und Betriebsbremse (4), einer Radlagerung (5), einem Laufrad (6) auf der Nabe und einer Lenkanbindung (7). Das Abtriebsglied (24) ist mit dem anzutreibenden Rad (6) koaxial zu dem Elektromotor (1) auf der Nabe angeordnet.

## Beschreibung

Die Erfindung betrifft eine Antriebseinheit für ein Fahrzeug, insbesondere einen Hilfsantrieb für einen Handhubwagen, mit den Merkmalen des Oberbegriffs des Anspruchs 1.

Handhubwagen dienen zum Anheben, Transportieren und Absetzen von normalerweise auf sogenannten Paletten befindlichen Lasten. Sie bestehen in der Regel aus einer Gabel mit zwei Zinken und sind im Kopfbereich mit einer mit Hilfe einer Deichsel schwenkbaren Antriebseinheit versehen. Für die Manövrierfähigkeit des Handhubwagen auf engstem Raum ist der Radius eines sogenannten Hüllkreises entscheidend, den die z. B. in einem Laufrad integrierte Antriebseinheit hat.

Die DE-31 50 780 A1 offenbart einen Radnabenantrieb für Hubstapler, der in einem lenkbaren Rad einen Elektromotor mit Getriebe aufnimmt, wobei dem Rad mit axialem Abstand ein Zwillingsrad zugeordnet ist, um die Kippsicherheit dieses Hubstaplers zu erhöhen. Ein Hinweis auf Manövrierfähigkeit des Hubstaplers auf engstem Raum ist der DE-31 50 780 A1 nicht zu entnehmen.

Die DE-25 11 452 A offenbart einen Radnabenantrieb für Hubstapler, der für kleinstmögliche Schwenkradien in einem lenkbaren Rad einen Elektromotor mit Getriebe aufnimmt. Hinweise auf die Anordnung von Bremsen und/oder Steuerungen für den Elektromotor sind der DE-25 11 452 A nicht zu entnehmen, so dass wichtige Sicherheitserfordernisse für den Betrieb und die Antriebssteuerung dieses Hubstaplers nicht gelöst sind.

Aus der WO 88/04241 ist ein Radantrieb für Hubstapler bekannt mit einer Antriebswelle, die von einem in Radnähe angeordneten Elektromotor angetrieben ist. Der Antrieb erfolgt über eine Kegelrad-Getriebestufe, die eine Radachse antreibt, welche in einer gehäusefesten Nabe gelagert ist. Das Rad ist unter einem horizontalen Rahmen angeordnet, der mit einem auf der Innenseite des Rads etwa vertikal erstreckten Getriebegehäuse fest verbunden ist. Die Kegelrad-Getriebestufe ist zwischen Elektromotor und Antriebswelle eingeschaltet. Die Drehachse des Elektromotors verläuft etwa in einer vertikalen Ebene auf der dem Rad abgewandten Seite des Getriebegehäuses. Im Getriebegehäuse ist eine Stirnrad-Getriebestufe aus außen-verzahnten Stirnrädern aufgenommen, von denen eines drehfest auf der Radachse sitzt. Der Elektromotor der WO 88/04241 ist ein Niederspannungs-Gleichstrommotor mit Elektrobremse. Hinweise auf die Anordnung der Steuerung für den Elektromotor sind der WO 88/04241 nicht zu entnehmen, so dass wichtige Erfordernisse für die Antriebssteuerung dieses Hubstaplers nicht gelöst sind. Der Motor ist separat und achsversetzt aufgesetzt, so dass aufwendige Getriebe- und Gehäuseelemente erforderlich werden. Der Radnabenantrieb soll zwar mit reduzierten Abmessungen erfolgen, ein Hinweis auf Manövrierfähigkeit des Hubstaplers auf engstem Raum ist der WO 88/04241 aber nicht zu entnehmen.

Aus der EP-0 999 081 A2 ist eine elektromotorische Antriebseinheit für einen Handhubwagen bekannt mit einem Laufrad, das von einem Drehstrommotor angetrieben wird, dessen Gehäuse als Lager für die Nabe des Laufrads dient, wobei zur Verringerung von seitlichem Überstand die gesamte Breite des Laufrades als Einbauraum für den Drehstrommotor genutzt wird. Eine elektromagnetisch betätigbare Bremseinrichtung wirkt koaxial auf die Welle des Drehstrommotors. Das Gehäuse ist zugleich zur Aufnahme eines Getriebes vorgesehen mit einem fliegend am Gehäuse gelagerten Zahnrad, das von der Welle des Drehstrommotors angetrieben ist. Das einstückige Gehäuse dient auch als Radkasten und insbesondere als Tragstruktur für das Schwenklager. Ein Nachteil dieses Standes der Technik ist es, dass die Bremseinrichtung außerhalb des Gehäuses angeordnet und so die Abmessungen der Antriebseinheit vergrößert ist. Ein weiterer Nachteil dieses Standes der Technik ist es, dass der Drehstrommotor achsversetzt ist zum Abtrieb und so aufwendige Getriebe- und Gehäuseelemente erforderlich werden.

Aufgabe der Erfindung ist es, eine Antriebseinheit für ein Fahrzeug, insbesondere einen Hilfsantrieb für einen Handhubwagen zu schaffen, die nicht mit den Nachteilen des Standes der Technik behaftet ist.

Die Lösung erfolgt mit einer Antriebseinheit für ein Fahrzeug, insbesondere einem Hilfsantrieb für einen Handhubwagen, mit den Merkmalen des Anspruchs 1.

Gemäß der Erfindung ist eine Antriebseinheit für ein Fahrzeug, insbesondere ein Hilfsantrieb für einen Handhubwagen im Flurförderfahrzeugbereich, mit einer Nabe, welche als Gehäuseträger ausgebildet ist, einer Steuervorrichtung, einem Abtriebsglied, einem Elektromotor, einem Stirnradgetriebe, einer Park- und Betriebsbremse, einer Radlagerung, einem Rad und einer Lenkanbindung versehen. Das Abtriebsglied ist vorteilhaft koaxial zu dem Elektromotor in eine Nabe des anzutreibenden Rades integriert. Gemäß der Erfindung kann auf extrem kleinem Bauraum in einem Rad beispielsweise mit Durchmesser 200 mm eine Antriebseinheit mit einfachen Getriebe- und Gehäuseelementen untergebracht werden, wobei in der Antriebseinheit eine Getriebeaufhängung in einem Gehäuseträger mit Lenkanbindung vorgesehen ist. Ein weiterer Vorteil der Erfindung ist der für die Manövrierfähigkeit des Hubstaplers auf engstem Raum bestimmende Wert für einen Hüllkreis, der beispielsweise mit einem Durchmesser von 1 600 mm außerordentlich günstig ist.

Gemäß einer vorteilhaften Ausgestaltung der Erfindung ist die Steuervorrichtung für den Elektromotor mit dem Elektromotor in die Nabe des anzutreibenden Laufrades integriert und umfaßt vorzugsweise neben der Elektronik für die Fahrbetätigung auch die Elektronik für die Leistungssteuerung, so daß zusätzliche elektrische Leitungsanschlüsse oder Führungen entbehrlich sind.

Gemäß einer weiteren vorteilhaften Ausgestaltung der Erfindung ist die Park- und Betriebsbremse zwischen Elektromotor und Stirnradgetriebe und somit vorteilhaft im Kraftfluß zwischen Elektromotor und Abtrieb integriert.

Gemäß einer weiteren vorteilhaften Ausgestaltung der Erfindung ist die Steuervorrichtung auf der vom Stirnradgetriebe abgewandten Seite des Elektromotors angeordnet.

Gemäß einer weiteren vorteilhaften Ausgestaltung der Erfindung weist das Stirnradgetriebe auf engstem Raum eine besonders hohe Übersetzung von beispielsweise i = 15 auf.

Gemäß einer weiteren vorteilhaften Ausgestaltung der Erfindung ist das Abtriebsglied einteilig, für die Aufnahme eines vorzugsweise aufvulkanisierten Laufrades eines zentralen Abtriebsstirnrads, das als Getriebegehäuse ausgebildet ist für koaxiale Rückführung im Leistungsfluß auf das gemäß der Erfindung einfache, zentrale Abtriebsstirnrad.

Gemäß einer weiteren vorteilhaften Ausgestaltung der Erfindung kann das Laufrad auch als separates Teil für eventuelle Austauschbarkeit über einen Festsitz und/oder über ein Profil auf das Abtriebsglied aufgebracht werden.

Gemäß einer weiteren vorteilhaften Ausgestaltung der Erfindung ist der Elektromotor mit einem sogenannten A-Schild zur Lagerung für das Laufrad und einer Lenkanbindung ausgestattet, wobei das A-Schild in den Gehäuseträger integriert ist.

Gemäß einer weiteren vorteilhaften Ausgestaltung der Erfindung ist das einteilige Abtriebsglied als Laufradfelge ausgebildet.

Gemäß einer weiteren vorteilhaften Ausgestaltung der Erfindung ist eine Lebensdauer-Fettschmierung vorgesehen für reduzierten Wartungsaufwand.

Gemäß einer weiteren vorteilhaften Ausgestaltung der Erfindung ist der Elektromotor als Bürstenloser Permant-Magnet erregter Motor ausgebildet.

Gemäß einer weiteren vorteilhaften Ausgestaltung der Erfindung sind für eine vorteilhafte Lagerung zur Antriebsmitte die versetzten Doppelstirnräder im Gehäuseträger einteilig angeordnet.

Gemäß einer weiteren vorteilhaften Ausgestaltung der Erfindung sind für höhere Antriebsleistungen 2 oder 3 achsversetzte Doppelstirnräder als Leistungsteiler am Umfang angeordnet.

Gemäß einer weiteren vorteilhaften Ausgestaltung der Erfindung weist der abtriebsseitige Zahneingriff eine Balligkeit sowie Flankenrichtungs-Korrektur auf, um die Verkippung des als Kugellager ausgebildeten Radlagers und damit des Abtriebsglieds zu kompensieren. Desweiteren bewirkt die Anordnung des mindestens einen Doppelstirnrads zwischen 0° und 180°, bevorzugt jedoch im Bereich von 90° zur vertikalen Getriebeebene, einen weiteren zusätzlich positiven Einfluß auf den abtriebsseitigen Zahneingriff. Die Verkippung des abtriebsseitigen Kugellagers als Radlager wird hervorgerufen im wesentlichen durch Lenkkräfte am Laufrad sowie durch die drehmomentbedingten Zahnkräfte am abtriebsseitigen Zahneingriff. Durch die Anordnung des Abtriebsstirnrads im Bereich von 90° zur vertikalen Getriebeebene wirken sich Verformungen durch Radaufstandskräfte und Lenkkräfte nicht negativ auf den Zahneingriff des Abtriebsstirnrads aus.

Gemäß einer weiteren vorteilhaften Ausgestaltung der Erfindung ist die zentrale Antriebswelle in einem Standard-Kugellager mit eingeschränkter Lagerluft im Gehäuseträger gelagert, so daß der integrierte Elektromotor frei von äußeren Krafteinflüssen ist.

Gemäß einer weiteren vorteilhaften Ausgestaltung der Erfindung ist die Park- und Betriebsbremse als elektromagnetische Einscheibenbremse ausgebildet, die für erhöhte Sicherheit elektrisch geöffnet und durch Federkraft geschlossen wird.

Die erfindungsgemäße Antriebseinheit kann gemäß einer weiteren vorteilhaften Ausgestaltung der Erfindung ohne Radialwellendichtungen mit Fettschmierung abgedichteter Kugellager an An- und Abtriebsseite betrieben werden.

Die Erfindung wird im folgenden anhand eines bevorzugten Ausführungsbeispiels beschrieben.

Es zeigen:
- Fig. 1: einen Querschnitt durch eine Antriebseinheit gemäß der Erfindung,
- Fig. 2: eine Draufsicht auf die Antriebseinheit gemäß der Erfindung und

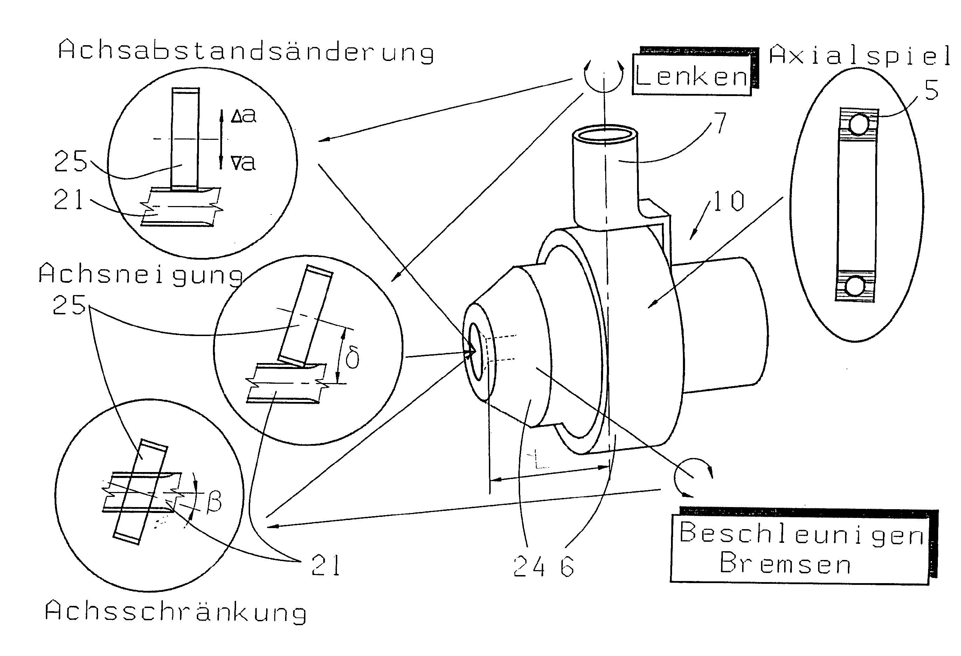

- Fig. 3: schematische Ansichten der Antriebseinheit und zum Einfluß der Lagerverkippung auf den Zahneingriff der Antriebseinheit gemäß der Erfindung.

### Fig. 1:

Eine Antriebseinheit 10 für ein anzutreibendes Laufrad 6 ist in einer Nabe aus einem drehfesten Gehäuseträger 8 angeordnet. Ein Kugellager 5 überträgt Kräfte als Standard-Kugellager mit "eingeschränkter Lagerluft" direkt vom Laufrad 6 auf den Gehäuseträger 8. An den Gehäuseträger 8 ist über Schrauben 11 mit Abstand für den Durchlaß von Kühlluft ein Gehäuse 12 montiert, mit dem ein Elektromotor 1 und eine Steuervorrichtung 2 für den Elektromotor 1 koaxial in die Nabe des anzutreibenden Laufrades 6 integriert ist. Der Elektromotor 1 ist kugelgelagert in einem B-Schild 14 zwischen Elektromotor 1 und Steuervorrichtung 2. Eine Antriebswelle 15 des Elektromotors 1 ist im Gehäuseträger 8 mit einem Kugellager 19 gehalten und weist eine Verzahnung für ein Ritzel 20 auf. An An- und Abtriebsseite ist das abgedichtete Kugellager 19 mit Fettschmierung als Lebensdauerschmierung ausgeführt.

Ein zur Richtung der Aufstandskräfte auf das Laufrad 6 senkrechtes, zweistufiges Stirnradgetriebe 3 weist zur Antriebsmitte versetzte Doppelstirnräder 21 auf mit Kugelund Nadellager 23, die axial und radial gehalten sind. Das Stirnradgetriebe 3 überträgt Leistung zwischen Ritzel 20 und einem als Getriebegehäuse ausgebildeten Abtriebsglied 24, über ein auf das Abtriebsglied 24 aufvulkanisiertes Abtriebsstirnrad 25. Das Abtriebsglied 24 ist koaxial zur Antriebswelle 15 des Elektromotors 1 und zu Ritzel 20. Stirnradgetriebe 3 weist für hohe Antriebsleistung am Umfang zwei- oder dreimal als Leistungsverteiler angeordnete und zur Antriebsmitte versetzte Doppelstirnräder 21 auf (nicht dargestellt).

Das Abtriebsglied 24 ist mit dem Kugellager 5 auf dem Gehäuseträger 8 gehalten. Kugellager 5 ist mit Sicherungsringen 26 jeweils an Anschlägen 27, 28 auf dem Gehäuseträger 8 und dem Abtriebsglied 24 gehalten und mit einer Abdeckung 39 gegen den Eintritt von Schmutz und den Austritt von Schmiermittel geschützt. Auf das Abtriebsglied 24 ist einteilig oder lösbar eine Lauf- und Aufstandsfläche 29 des Laufrads 6 montiert.

Zum Verschwenken der Antriebseinheit 10 um die zur Lauf- und Aufstandsfläche 29 des Laufrads 6 senkrechte Achse 30 ist eine Lenkanbindung 7 am Gehäuseträger 8 mit einer Deichsel (nicht dargestellt) verbunden. Eine Park- und Betriebsbremse 4 ist zwischen Elektromotor 1 und dem zweistufigen Stirnradgetriebe 3 auf der Antriebswelle 15 angeordnet. Eine Bremsscheibe 31 der Park- und Betriebsbremse 4 ist auf einem Ring 32 der Antriebswelle 15 geführt. Bremsbelag auf Bremsbacken 33 sind mit einem Bremskolben 34 axial verschieblich am Gehäuseträger 8 mit Bolzen 35 montiert. Im Bremskolben 34 sind koaxial zur Antriebswelle 15 elektromagnetische Wicklungen 36 und eine Rückstellfeder 37 angeordnet. Die Rückstellfeder 37 beaufschlagt die Bremsscheibe 31 über den Bremskolben 34 mit einer Kraft, die die Bremse 4 schließt. Werden die elektromagnetischen Wicklungen 36 über Zuleitung 38 mit Spannung beaufschlagt, öffnet sich die Bremse 4.

### Fig. 2:

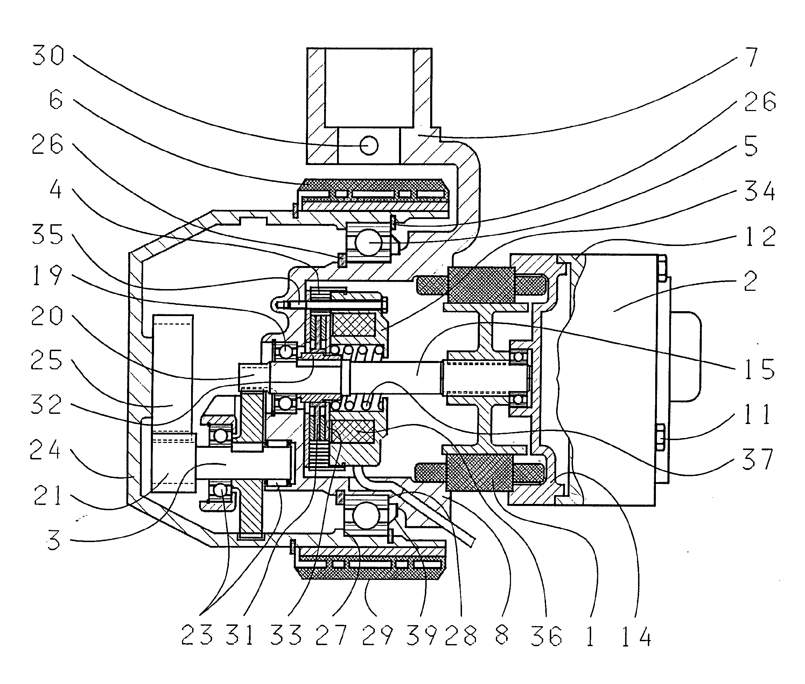

Übereinstimmende Merkmale sind mit den Bezugszeichen aus Fig. 1 bezeichnet. Antriebseinheit 10 für ein anzutreibendes Laufrad 6 ist mit der Lenkanbindung 7 schwenkbar montiert.

Ein zur Richtung der Aufstandskräfte auf das Laufrad 6 senkrechtes, zweistufiges Stirnradgetriebe 3 weist zur Antriebsmitte versetzte Doppelstirnräder 21 auf. Das Stirnradgetriebe 3 überträgt Leistung von der Antriebswelle 15 des Elektromotors 1 zu dem als Getriebegehäuse ausgebildeten Abtriebsglied 24, über das auf das Abtriebsglied 24 aufvulkanisierte Abtriebsstirnrad 25. Das Abtriebsglied 24 ist koaxial zur Antriebswelle 15 des Elektromotors 1 und zu Ritzel 20.

Der abtriebsseitige Zahneingriff am zweistufigen Stirnradgetriebe 3 weist eine Balligkeit sowie Flankenrichtungs-Korrektur auf, um die Verkippung des Kugellagers 5 und damit des Abtriebsglieds 24 zu kompensieren, wobei das Doppelstirnrad 21 im Bereich von 90° zur vertikalen Getriebeebene, montiert ist. Die Verkippung des abtriebsseitigen Kugellagers 5 durch Lenkkräfte am Laufrad sowie durch die drehmomentbedingten Zahnkräfte am abtriebsseitigen Zahneingriff führt durch die Anordnung des Doppelstirnrads 21 im Bereich von 90° zur vertikalen Getriebeebene dazu, daß sich Verformungen durch die Radaufstandskraft und Lenkkräfte nicht negativ auf den Zahneingriff des Abtriebsstirnrads 25 auswirken.

### Fig. 3:

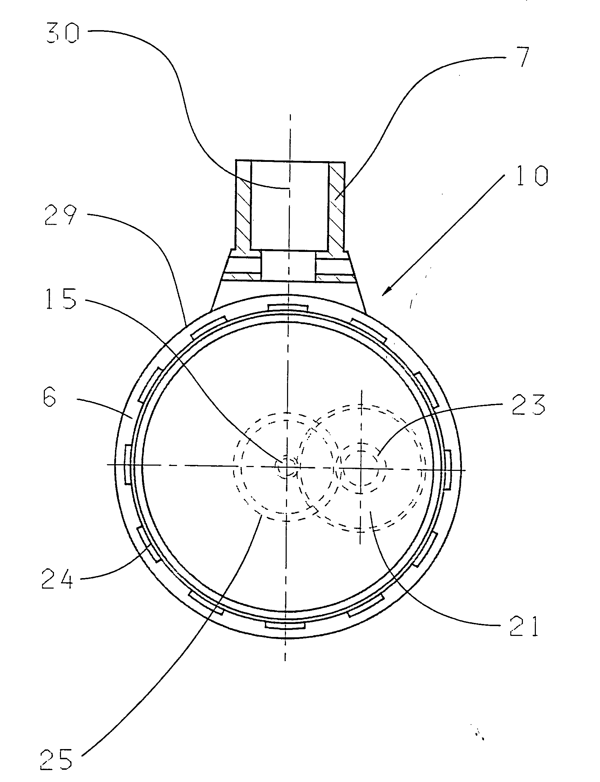

Übereinstimmende Merkmale sind mit den Bezugszeichen aus Fig. 1 und 2 bezeichnet. Antriebseinheit 10 ist mit der Lenkanbindung 7 schwenkbar auf dem als Getriebegehäuse ausgebildeten Abtriebsglied 24 mit dem anzutreibenden Laufrad 6 montiert. L entspricht dem Abstand von Schwenk-achse zu Zahneingriff des Abtriebsstirnrads 25.

Das als Getriebegehäuse ausgebildete Abtriebsglied 24 ist mit dem gesondert mit seinen Abmessungen und seiner "Lagerluft" dargestellten Kugellager 5 auf dem drehfesten Gehäuseträger 8 montiert. Aus Verkippungen des Kugellagers 5 und damit des Abtriebsglieds 24 resultieren abtriebsseitige Zahneingriffe am zweistufigen Stirnradgetriebe 3, die gesondert schematisch dargestellt sind für die Zustände:
a) Achsabstandsänderung,
b) Achsneigung und
c) Achsschränkung,
wobei die Zahnflankenmodifikation aus Balligkeit und Flankenlinie zur Kompensation der Lagerverkippung jeweils ausreicht, insbesondere in Verbindung mit den zur Richtung der Aufstandskräfte auf das Laufrad 6 senkrechten und zur Antriebsmitte versetzten Doppelstirnrädern 21.

### Bezugszeichen

- 1: Elektromotor
- 2: Steuervorrichtung
- 3: Stirnradgetriebe
- 4: Park- und Betriebsbremse
- 5: Kugellager
- 6: Laufrad
- 7: Lenkanbindung
- 8: Gehäuseträger
- 10: Antriebseinheit
- 11: Schrauben
- 12: Gehäuse
- 13: Steuervorrichtung
- 14: B-Schild
- 15: Antriebswelle
- 16 19: Kugellager
- 20: Ritzel
- 21: Doppelstirnrad
- 22: Schraubverbund
- 23: Kugel- und Nadellager axial und radial
- 24: Abtriebsglied
- 25: Abtriebsstirnrad
- 26: Sicherungsringen
- 27: Anschläge
- 28: Anschläge
- 29: Lauf- und Aufstandsfläche
- 30: senkrechte Achse
- 31: Bremsscheibe
- 32: Ring
- 33: Bremsbacken
- 34: Bremskolben
- 35: Bolzen
- 36: elektro-magnetische Wicklungen
- 37: Rückstellfeder
- 38: Zuleitung
- 39: Abdeckung

## Patentansprüche

1. Antriebseinheit (10) für ein Fahrzeug, insbesondere Hilfsantrieb für einen Handhubwagen im Flurförderfahrzeugbereich, mit einer Nabe aus einem Gehäuseträger (8), einer Steuervorrichtung (2), einem Abtriebsglied (24), einem Elektromotor (1), einem Stirnradgetriebe (3), einer Parkund Betriebsbremse (4), einer Radlagerung (5), einem Laufrad (6) auf der Nabe und einer Lenkanbindung (7), **dadurch gekennzeichnet,dass** das Abtriebsglied (24) mit dem anzutreibenden Rad (6) koaxial zu dem Elektromotor (1) auf der Nabe angeordnet ist.

2. Antriebseinheit (10) gemäß Anspruch 1, **dadurch gekennzeichnet,dass** die Steuervorrichtung (2) für den Elektromotor (1) mit dem Elektromotor (1) in die Nabe des anzutreibenden Rades (6) integriert ist.

3. Antriebseinheit (10) gemäß Anspruch 1, **dadurch gekennzeichnet,dass** die Park- und Betriebsbremse (4) zwischen Elektromotor (1) und Stirnradgetriebe (3) integriert ist.

4. Antriebseinheit (10) gemäß Anspruch 1, **dadurch gekennzeichnet,dass** die Steuervorrichtung (2) auf der vom Stirnradgetriebe (3) abgewandten Seite des Elektromotors (1) angeordnet ist.

5. Antriebseinheit (10) gemäß Anspruch 1, **dadurch gekennzeichnet,dass** das Stirnradgetriebe (3) eine Übersetzung i = 15 aufweist.

6. Antriebseinheit (10) gemäß Anspruch 1, **dadurch gekennzeichnet,dass** das Abtriebsglied (24) einteilig, für die Aufnahme eines Abtriebsstirnrads (25), als Getriebegehäuse ausgebildet ist.

7. Antriebseinheit (10) gemäß Anspruch 1, **dadurch gekennzeichnet,dass** der Elektromotor (1) mit einem A-Schild in die Nabe des anzutreibenden Rades (6) integriert ist, die mit einem Radlager (5) für das Rad (6) und einer Lenkanbindung (7) ausgestattet ist.

8. Antriebseinheit (10) gemäß Anspruch 6, **dadurch gekennzeichnet,dass** das Abtriebsglied (24) einteilig als Laufradfelge ausgebildet ist.

9. Antriebseinheit (10) gemäß Anspruch 1, **dadurch gekennzeichnet,dass** das Laufrad (6) als separates Teil über einen Festsitz und/oder über ein Profil lösbar mit dem Abtriebsglied (24) verbindbar ist.

10. Antriebseinheit (10) gemäß Anspruch 1, **dadurch gekennzeichnet,dass** diese mit einer Lebensdauer-Fettschmierung ausgestattet ist.

11. Antriebseinheit (10) gemäß Anspruch 1, **dadurch gekennzeichnet,dass** der Elektromotor (1) als Bürstenloser Permant-Magnet erregter Motor ausgebildet ist.

12. Antriebseinheit (10) gemäß Anspruch 1, **dadurch gekennzeichnet,dass** zur Antriebsmitte versetzte Doppelstirnräder (21) einteilig im Gehäuseträger (8) eingebracht sind.

13. Antriebseinheit (10) gemäß Anspruch 1, **dadurch gekennzeichnet,dass** 2 oder 3 achsversetzte Stirnräder (21) als Leistungsteiler am Umfang angeordnet sind.

14. Antriebseinheit (10) gemäß Anspruch 1, **dadurch gekennzeichnet,dass** der Zahneingriff am Abtrieb eine ballige Verzahnung sowie Flankenrichtungskorrektur aufweist.

15. Antriebseinheit (10) gemäß Anspruch 1, **dadurch gekennzeichnet,dass** das mindestens eine Doppelstirnrad (21) zwischen 0° und 180°, bevorzugt jedoch im Bereich von 90° zur vertikalen Getriebeebene, angeordnet ist.

16. Antriebseinheit (10) gemäß Anspruch 1, **dadurch gekennzeichnet,dass** Dichtungen für Fettschmierung am Kugellager (19) an An- und Abtriebsseite vorgesehen sind.

17. Antriebseinheit (10) gemäß Anspruch 1, **dadurch gekennzeichnet,dass** die Park- und Betriebsbremse (4) als elektromagnetische Einscheibenbremse ausgebildet ist, die elektrisch geöffnet und durch Federkraft geschlossen wird.
